## Europäisches Patentamt
## European Patent Office
## Office européen des brevets

(19)

(11) Publication number: **0 108 753**
**B1**

(12) **EUROPEAN PATENT SPECIFICATION**

(45) Date of publication of patent specification: **03.09.86**

(51) Int. Cl.⁴: **B 32 B 15/01, C 23 C 28/02**

(21) Application number: **83900079.1**

(22) Date of filing: **15.12.82**

(86) International application number:
**PCT/SE82/00429**

(87) International publication number:
**WO 83/02087 23.06.83 Gazette 83/15**

(54) **PROCESS FOR THE PRODUCTION OF AN ANTI-CORROSIVE AND WEAR-RESISTANT COATING FOR STEEL.**

(30) Priority: **17.12.81 SE 8107572**

(43) Date of publication of application:
**23.05.84 Bulletin 84/21**

(45) Publication of the grant of the patent:
**03.09.86 Bulletin 86/36**

(84) Designated Contracting States:
**BE DE FR GB NL SE**

(56) References cited:
**DE-B-2 632 439**
**SE-B- 140 750**
**US-A-2 126 244**
**US-A-3 150 937**

(73) Proprietor: **SSAB Svenskt Stal AB**
**Box 163 44**
**S-103 26 Stockholm (SE)**

(72) Inventor: **SCHÖN, Lars Torbjörn**
**Rösegatan 3**
**S-781 62 Borlänge (SE)**

(74) Representative: **Wärulf, Olov**
**Svenkst Stal**
**S-613 01 Oxelösund (SE)**

Courier Press, Leamington Spa, England.

## Description

The present invention relates to a process for the production of an anti-corrosive, wear-resistant and anti-skid coating on steel surfaces intended for e.g. walkways or roadways for vehicles supported on rubber wheels.

It is known that a coating with anti-corrosive characteristics is obtained by thermal spraying of zinc, aluminium or their alloys on to a steel surface. It is also known that a wear-resistant and anti-skid coating is achieved by thermal spraying of aluminium, also on to a steel surface. In this case the coating consists of aluminium which in the main adheres to the steel surface mechanically and which contains corundum, $Al_2O_3$, and is partly covered by it. The wear-resistant aluminium layer containing corundum has a rough surface profile, as a result of which it also prevents skidding even under extreme conditions such as in the presence of oil. The coating process consists in first thoroughly cleaning the surface to be coated, generally by blasting, whereupon using for instance an arc spray aluminium is sprayed from a wire in known manner, in one or several layers. It is also known that it is very important for the coating to adhere well to the steel surface so as to ensure that the protection against corrosion or against wear will function in a satisfactory way.

One disadvantage of the hitherto known coating processes consists in the fact that preliminary treatment of the steel surface must be carried out with a high degree of accuracy in order to obtain satisfactory adhesion between the steel surface and the coating. Metal spraying must take place within a very short time after the preliminary treatment. Another disadvantage consists in the fact that hitherto known thermally sprayed metal coatings must be subjected to a secondary treatment with a sealant such as a silicone-aluminium paint. This is due to the fact that the coating which may be up to 100 μm thick is broken by unavoidable pores, which must be sealed so as to prevent water from penetrating into the surface of the steel and causing corrosion. In a highly corrosive environment it may even be necessary to provide the coating with several layers of paint, and in that case this type of coating constitutes an excellent foundation for paintwork.

The German patent document DE—A—2632439 describes a coating which consists of an inner layer of zinc and an outer layer of aluminium and further a process for the making of this coating. The process consists in that the zinc layer is applied to the steel surface electrolytically which means that this layer will not have any metallurgical bonding to the steel until after the heating which is made after the aluminium powder is applied to form the outer layer. The aluminium layer does not include hard particles for anti-skidding purpose. The process does not admit coating in builtup constructions.

It is also known that by hot dipping, e.g. hot dip galvanising of a steel surface, it is possible to achieve good protection against corrosion. This protection is subject to the disadvantage that it can be partly or entirely destroyed by various types of impairment affecting the protective layer of zinc, e.g. by the latter being exposed to intense local corrosion or wear. By way of example it may be pointed out that with walk- and roadways or in road culverts and similar installations in which corrosive water flows, such water frequently also entraining surface-abrading sand, the zinc layer's resistance to wear and corrosion is poor.

Another way in which the zinc layer is impaired is highly localised in character and occurs e.g. when a galvanised steel plate is cut, thus exposing the steel surface at the cutting edge. Yet another type of impairment occurs when welding galvanised plates, most frequently in connection with spot-welding. On occasion the zinc layer is coated with e.g. plastics or bitumen, as a result of which the resistance of the anti-corrosive layer increases. This is particularly necessary with welds and cutting edges since the plate would otherwise begin to rust as soon as it is used within an aggressive environment. The object of the present invention consists in providing an anti-corrosive coating for steel surfaces, which adheres well to the steel surface and can also be resistant to wear and prevent skidding.

The invention is characterised in that an inner anti-corrosive layer of zinc or an alloy of zinc and aluminium, with a lower melting point in relation to the melting point of an entirely or partly covering outer layer, is applied to the steel surface by hot dipping, and that the outer layer consists of aluminium, or an alloy of aluminium and zinc, with a higher melting point than the inner layer and is applied by thermal spraying, whereby at least the surface of the inner layer is heated until it melts.

In a preferred embodiment the outer layer consists mainly of aluminium which in conjunction with the thermal spraying is partly oxidised to corundum so as to increase its wear resistance and the characteristics which prevent skidding. The outer layer may also be levelled by means of a layer of paint.

With the outer layer consisting of aluminium or zinc, this layer too contributes to the degree to which the steel surfaces are protected against corrosion, in particular within those areas in which the inner anti-corrosive layer is or may be expected to be weakened or broken for one reason or another.

One advantage of having two metal layers consists in the fact that they adhere better to the steel surface than corresponding known layers and are in combination more resistant to corrosion than any of the known layers. Another advantage is due to the fact that the outer layer can be applied to a plate where in the process of machining the inner layer has been damaged, either by applying the outer layer throughout or only within certain exposed areas. Furthermore it may for example be necessary only to provide a plate assembly with an outer layer at those points of the assembly where such a layer is desirable, e.g. along the lower part of the inner wall of a road culvert, where sand entrained by the flowing water causes corrosion and wear. A further advantage consists in the fact that subsequent sealing by means of a sealing agent is not necessary since the inner layer possesses such good anti-corrosive characteristics.

The invention is described in greater detail by way of two examples relating to methods of producing a coating on a steel surface, with reference to two figures showing an enlarged cross-section through the coating.

Example 1

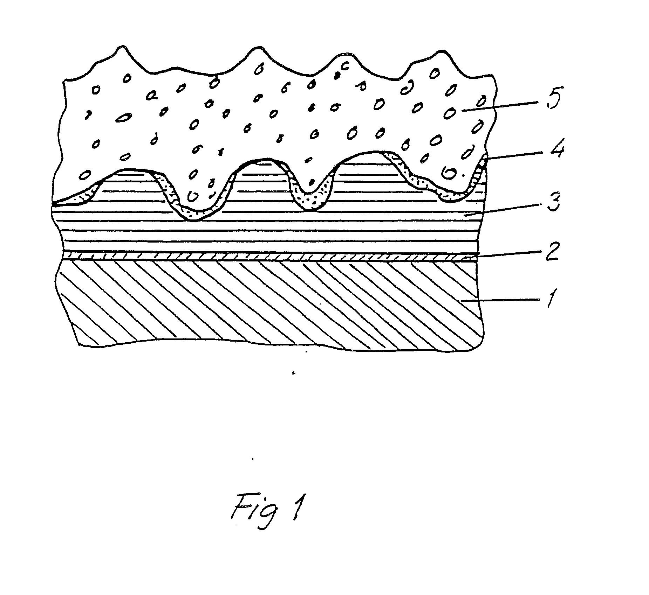

The steel surface 1 as shown in Figure 1 is hot dip galvanised in the known way by dipping in a bath of zinc forming part of a continuous hot dip galvanising line. As a result of this process an iron-zinc alloy is achieved within a boundary zone 2 next to the steel surfacse and on top of this boundary zone 2 an inner layer 3 of homogeneous zinc. Using an arc spray aluminium is then sprayed on to the inner layer 3, whereby the latter partly melts and forms an entirely or partly alloyed zone 4 which ensures good adhesion to the outer layer 5 consisting of aluminium applied to it. By melting the aluminium in the arc spray and by mixing in compressed air the aluminium in the arc spray is oxidised and by mixing in compressed air the aluminium is oxidised partly to corundum, which is embedded in the outer layer 5 also covering its surface.

Inasmuch as the outer layer 5 is caused to adhere well to the inner layer 3 since the latter melts open in the course of spraying and since the inner layer 3 has been previously alloyed with the steel surface 1 in a boundary zone 2, one obtains a generally speaking better adhesion of the metal coating than with the methods hitherto known.

By comparison with the hitherto known coatings having the same object one has also achieved a better cathodic protection.

Example 2

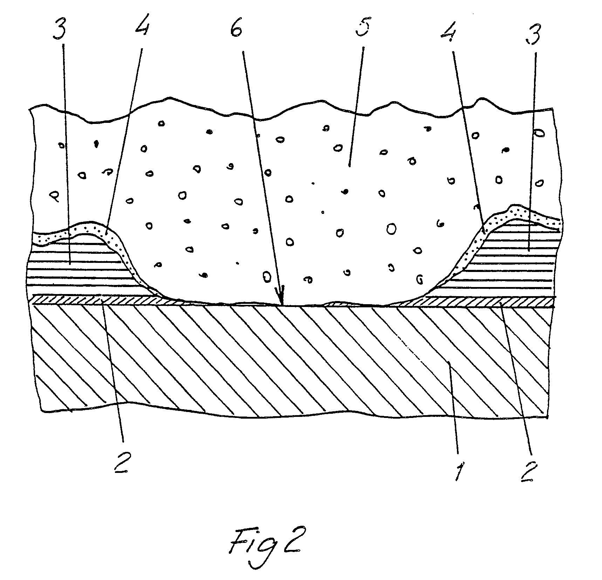

The steel surface 1 as shown in figure 2 exhibits a damaged part 6 in the inner zinc layer 3 brought about by spot-welding and causing the inner zinc layer 3 to be broken in this area. The damage has subsequently been taken care of by supplying on an outer layer 5 consisting of aluminium as in example 1 both over the inner zinc layer 3 and the area of the damage 6. In this process the aluminium is alloyed with the inner zinc layer 3 so as to form an alloyed zone 4 but in the main adheres to the damaged area 6 only mechanically. As a result of the alloyed zone 4 surrounding the damaged area 6 attachment is achieved of that part of the outer layer 5 covering the damaged area 6 and compensating the poorer mechanical adhesion of the latter.

**Claims**

1. A process for the production of an anti-corrosive coating on a steel surface (1) which may also be wear resistant and also prevent skidding, characterised in that an inner anti- corrosive layer (3) of zinc or an alloy of zinc and aluminium, with a lower melting point in relation to the melting point of an entirely or partly covering outer layer (5), is applied to the steel surface (1) by hot dipping, and that the outer layer (5) consists of aluminium, or an alloy of aluminium and zinc, with a higher melting point than the inner layer and is applied by thermal spraying, whereby at least the surface of the inner layer (3) is heated until it melts.

2. A process in accordance with claim 1, characterised in that the outer layer (5) consists mainly of aluminium which in conjunction with the thermal spraying is partly oxidised to corundum so as to increase its wear resistance and the characteristics which prevent skidding.

3. A process in accordance with claim 1 or 2, characterised in that the outer layer is levelled by means of a layer of paint.

**Patentansprüche**

1. Verfahren zur Herstellung einer korrosionsfesten Beschichtung für Stahl (1), die auch verschleissfest und ebenfalls rutschfest sein kann, dadurch gekennzeichnet, dass eine innere korrosionsfeste Schicht (3) aus Zink oder einer Legierung aus Zink und Aluminium, mit einem niedrigeren Schmelzpunkt im Verhältnis zum Schmelzpunkt einer ganz oder teilweise deckenden äusseren Schicht (5), durch Heisstauchen auf die Stahlfläche (1) aufgetragen wird und dass die äussere Schicht (5) aus Aluminium oder einer Legierung aus Aluminium und Zink besteht, mit einem höheren Schmelzpunkt als die innere Schicht und durch thermisches Spritzen aufgetragen wird, wobei zumindest die Fläche der inneren Schicht (3) bis zum Schmelzen erhitzt wird.

2. Verfahren wir Anspruch 1, dadurch gekennzeichnet, dass die äussere Schicht (5) hauptsächlich aus Aluminium besteht, welches im Zusammenhang mit dem thermischen Spritzen teilweise zu Korund oxidiert wird, um dessen Verschleissfestigkeit und rutschfesten Eigenschaften zu erhöhen.

3. Verfahren wie Anspruch 1 oder 2, dadurch gekennzeichnet, dass die äussere Schicht mit einer Farbschicht ausgeglichen wird.

**Revendications**

1. Un procédé de production d'un revêtement anti-corrosif sur une surface d'acier (1), qui peut aussi être résistant à l'usure et en outre antidérapant, caractérisé en ce qu'une couche anti-corrosive intérieure (3) de zinc ou d'un alliage de zinc et d'aluminium, à point de fusion inférieur au point de fusion d'une couche extérieure (5) la recouvrant entièrement ou partiellement, est appliquée à la surface d'acier (1) par immersion à chaud, et que la couche extérieure (5) consiste en de l'aluminium, ou un alliage d'aluminium et de zinc, à point de fusion plus élevée que la couche intérieure, et est appliquée par pulvérisation à chaud, de sorte qu'au moins la surface de la couche intérieure (3) est chauffée jusqu'à ce qu'elle fonde.

2. Un procédé suivant la revendication 1, caractérisé en ce que la couche extérieure (5) consiste principalement en de l'aluminium qui, conjointement avec la pulvérisation à chaud, subit partiellement une oxydation en corindon de manière à augmenter sa résistance à l'usure et les caractéristiques anti-dérapantes.

3. Un procédé suivant la revendication 1 ou 2, caractérisé en ce que la couche extérieure est égalisée au moyen d'une couche de peinture.

0 108 753

Fig 1

1

Fig 2